# EUROPEAN PATENT SPECIFICATION

(11) **EP 1 868 874 B1**
(45) Date of publication and mention of the grant of the patent: **17.03.2010**
(21) Application number: 06747613.5
(22) Date of filing: 05.04.2006
(51) Int. Cl.: B62D 63/06

(54) **COLLAPSIBLE TRAILER FOR VEHICLE**
ZUSAMMENKLAPPBARER FAHRZEUGANHÄNGER
REMORQUE PLIANTE POUR VEHICULE

(30) Priority: 08.04.2005 NO 20051735
(43) Date of publication of application: 26.12.2007
(73) Proprietor: Øyasæter, Eirik, 1363 Høvik (NO)
(72) Inventor: Øyasæter, Eirik, 1363 Høvik (NO)
(74) Representative: Charlton, Peter John
(86) International application number: PCT/NO2006/000126
(87) International publication number: WO 2006/107213

(56) References cited:
- WO-A-2005/080214
- AU-A- 7 887 681
- GB-A- 2 267 468
- US-A- 2 110 944
- US-A- 2 879 072
- US-A- 4 230 340

## Description

The invention concerns a collapsible trailer for vehicle.
This is basically an ordinary trailer for vehicle which in a simple way can be folded to a flat package for space saving storage. In collapsed (folded) condition the trailer will require minimal storage room and for example could be positioned vertically on edge along the inside of a garage wall etc.

Previously a number of solutions have been suggested for the same problem. Some of the solutions include that only side walls/frames, draw or bottom can be folded together. Other solutions show that the trailer can be positioned on edge and that the wheels can be "hoisted up" vertically on level with the trailer box. References are here made to the patented solutions US 4.362.316, US 4.480.851,US 6.010.145, US 2.720.413.

GB-A-2267468, which disclosure is taken as basis for the preamble features of claim 1, discloses a trailer which has a main base part and a pair of wheels with suspension means permitting folding of the wheels under the main base part. Side and end wall parts have hinges permitting them to be folded into a substantially parallel position in relation to said main base part and substantially within the confines of the main base part in plan view. Fore and aft base extension parts carry the end wall parts and are also foldable onto the main base part along with side extension wall parts hinged to the main side wall parts. Extensible and retractable tow hitch providers swivel to stow below and within the width of the main base part. A similar trailer is shown in US-A-2110944.

According to the invention, there is provided collapsible trailer for being drawn by a vehicle, said trailer comprising walls/frames and a cargo base, the cargo base having a drawing element which can telescopically be pushed in, and wherein said walls/frames can be collapsed inwards onto the surface of the cargo base; two or several wheels, which wheels with wheel suspension are mounted to a pipe/bearing pivotally provided inside or outside a frame, whereby the wheel suspension can be turned flush with the underside of the trailer; characterized in that demountable axle(s) is/are arranged between said two or several wheels.

Reference is made to the figures which depict the below discussed details:

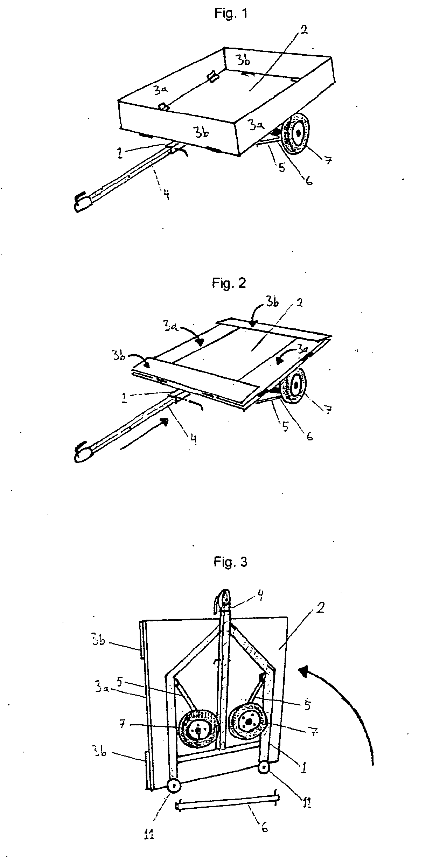

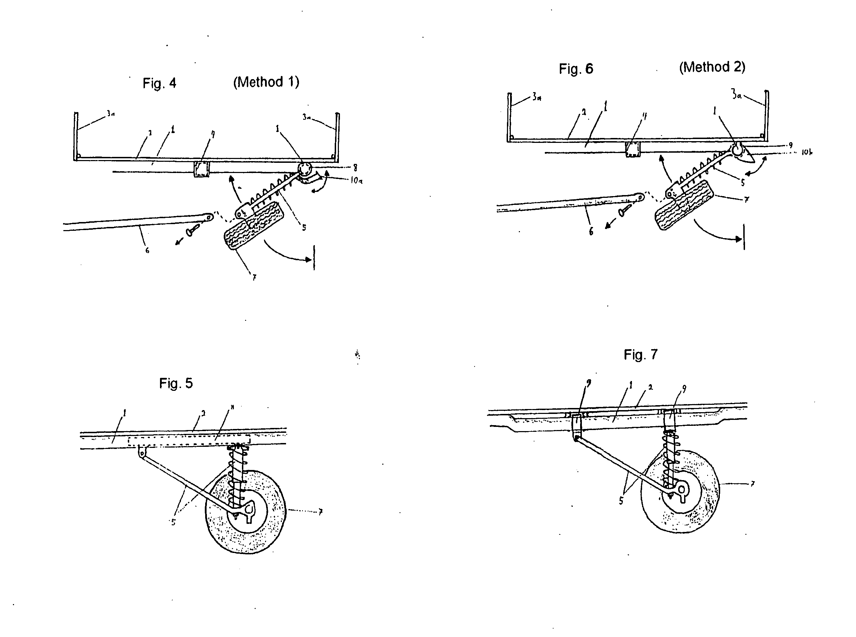

Figure 1 depicts the trailer before collapsing. Figure 2 depicts collapsing of side walls/frames (3a/3b) against the middle part and the draw (4) is pushed in. Figure 3 depicts the trailer completely collapsed and located on edge. The axle (6) is here dismounted from the wheels (7) and turned flush with the underside of the trailer (2). Figures 4, 5, 6 and 7 show two different methods for putting in wheel suspension (5) with the wheel (7). Figures 4 and 5 show Method 1 seen from the front and from the side, respectively. Figures 6 and 7 show Method 2 correspondingly.

### Novelties in relation to the prior art technique:

A new way to put together (collapse) a trailer with commonly known telescopic drawing element (4) which can be pushed in, side walls/frames (3a, 3b) which can be folded down, axle which can be dismounted and insertable wheel suspension (5). The invention goes further with regard to functionality than previous solutions and makes the trailer to a less space requiring flat package in collapsed state. The trailer consists of a frame/a chassis (1) which is mounted to a cargo surface (2). To this cargo surface (2) sidewalls/frames (3a, 3b) are mounted which can be folded inwards on top of the cargo surface (2). The draw (4) is made telescopically and can be pushed into the frame (1). The wheels are connected to commonly known wheel suspension (5) consisting of hub, springs and possible bridge and shock absorber. The axel (6) between the wheels (7) can be dismounted by means of locking-/fastening device(s), and the wheels (7) can be turned flush with the underside of a trailer (2).

*Putting in wheel, Method 1,* *Figure 4**:* This is carried out in that the wheel suspension (5) at the upper part is mounted to a pipe/bearing (8), which is located pivotally *within* the frame (1). A physical stopper (10a) prevents the wheel suspension (5) to travel out of the calculated track width.

*Putting in wheel, Method 2,* *Figure 5*: This is carried out in that the wheel suspension (5) at the upper part is mounted to a pipe/bearing (9), which is pivotably located inside the frame (1). A physical stopper (10b) prevents the wheel suspension (5) from travelling out of the calculated track width.

In collapsed upright position at least two small wheels (11) substantially provided in vertical position in the lower edge of the trailer will ease the relocation.

## Claims

1. Collapsible trailer for being drawn by a vehicle, said trailer comprising:
walls/frames (3a, 3b) and a cargo base (2), the cargo base having a drawing element (4) which can telescopically be pushed in, and wherein said walls/frames (3a, 3b) can be collapsed inwards onto the surface of the cargo base (2);
two or several wheels (7), which wheels (7) with wheel suspension (5) are mounted to a pipe/bearing (8, 9) pivotally provided inside or outside a frame (1), whereby the wheel suspension (5) can be turned flush with the underside of the trailer;
**characterized in that** demountable axle(s) (6) is/are arranged between said two or several wheels (7).

2. Collapsible trailer for vehicle according to claim 1, **characterized in that** one or several stoppers (10a, 10b) is (are) located on the wheel suspension (5).

3. Collapsible trailer for vehicle according to claim 1, **characterized in that** at least two wheels (11) are arranged substantially in a vertical position at the lower edge of the trailer in an upright position.

4. Collapsible trailer for vehicle according to claim 1, **characterized in that** one or several axle(s) (6) is/are lock-/connectable by means of locking-/fastening device(s).

## Patentansprüche

1. Zusammenklappbarer Anhänger zum Ziehen durch ein Fahrzeug, wobei der Anhänger Folgendes umfasst:
Wände/Rahmen (3a, 3b) und eine Ladepritsche (2), wobei die Ladepritsche ein Zugelement (4) hat, das teleskcpisch eingeschoben werden kann, und wobei die genannten Wände/Rahmen (3a, 3b) einwärts auf die Oberfläche der Ladepritsche (2) geklappt werden können;
zwei oder mehrere Räder (7), wobei die Räder (7) mit Radaufhängung (5) an einem Rohr/Lager (8, 9) montiert sind, das innen oder außen an einem Rahmen (1) schwenkbar bereitgestellt ist, wodurch die Radaufhängung (5) so gedreht werden kann, dass sie mit der Unterseite des Anhängers bündig ist,
**dadurch gekennzeichnet, dass** (eine) abmontierbare Achse(n) (6) zwischen den genannten zwei bzw. mehreren Rädern (7) angeordnet ist/sind.

2. Zusammenklappbarer Anhänger für Fahrzeug nach Anspruch 1, **dadurch gekennzeichnet, dass** an der Radaufhängung (5) ein Anschlag oder mehrere Anschläge (10a, 10b) angeordnet ist/sind.

3. Zusammenklappbarer Anhänger für Fahrzeug nach Anspruch 1, **dadurch gekennzeichnet, dass** in einer aufrechten Position wenigstens zwei Räder (11) im Wesentlichen in einer senkrechten Position am unteren Rand des Anhängers angeordnet sind.

4. Zusammenklappbarer Anhänger für Fahrzeug nach Anspruch 1, **dadurch gekennzeichnet, dass** eine oder mehrere Achse(n) (6) mittels (einer) Sperr-/Betestigungsvorrichtung(en) sperr-/montierbar ist/sind.

## Revendications

1. Remorque pliante conçue pour être tractée par un véhicule, et comprenant :
des parois/bâtis (3a, 3b) et une base de chargement (2), la base de chargement étant munie d'un élément de traction (4) qui peut être rétracté télescopiquement, et dans laquelle lesdits parois/bâtis (3a, 3b) peuvent être rabattus vers l'intérieur sur la surface de la base de chargement (2) ;
au moins deux roues (7), lesdites roues (7) munies d'une suspension (5) des roues étant montées sur un tube/palier (8, 9) prévu de manière pivotante à l'intérieur ou à l'extérieur d'un bâti (1), la suspension (5) des roues pouvant pivoter pour être amenée de niveau avec le dessous de la remorque ;
**caractérisée en ce qu'**un ou des essieux démontrables (6) sont agencés entre lesdites deux roues (7) ou davantage.

2. Remorque pliante pour véhicule selon la revendication 1, **caractérisée en ce qu'**un ou plusieurs dispositifs de retenue (10a, 10b) sont situés sur la suspension des roues (5).

3. Remorque pliante pour véhicule selon la revendication 1, **caractérisée en ce qu'**au moins deux roues (11) sont agencées dans une position sensiblement verticale au bord inférieur de la remorque en position droite.

4. Remorque pliante pour véhicule selon la revendication 1, **caractérisée en ce qu'**un ou plusieurs essieux (6) peuvent être verrouillés/reliés au moyen d'un ou plusieurs dispositifs de verrouillage/fixation.
